# EUROPEAN PATENT SPECIFICATION

(11) **EP 4 194 770 B1**
(45) Date of publication and mention of the grant of the patent: **28.08.2024**
(21) Application number: 22803160.5
(22) Date of filing: 10.10.2022
(51) Int. Cl.: F24H 4/04, F24H 9/20, F24H 15/223, F24H 15/219, F24H 15/38

(54) **FREQUENCY REGULATION CONTROL METHOD AND APPARATUS, DEVICE, AND STORAGE MEDIUM**
STEUERUNGSVERFAHREN, -VORRICHTUNG UND -VORRICHTUNG ZUR FREQUENZREGELUNG UND SPEICHERMEDIUM
PROCÉDÉ ET APPAREIL DE COMMANDE DE RÉGULATION DE FRÉQUENCE, DISPOSITIF ET SUPPORT DE STOCKAGE

(30) Priority: 26.10.2021 CN 202111246608
(43) Date of publication of application: 14.06.2023
(73) Proprietor: GUANGDONG PHNIX ECO-ENERGY SOLUTION LTD., Guangzhou, Guangdong 511470 (CN)
(72) Inventor: JIANG, Hao, Guangzhou, Guangdong 511470 (CN); LEI, Pengfei, Guangzhou, Guangdong 511470 (CN); ZONG, Yi, Guangzhou, Guangdong 511470 (CN); LIU, Zhili, Guangzhou, Guangdong 511470 (CN)
(74) Representative: Bayramoglu et al.
(86) International application number: PCT/CN2022/124266
(87) International publication number: WO 2023/071753

(56) References cited:
- WO-A1-2016/187939
- CN-A- 105 805 953
- CN-A- 106 949 623
- CN-A- 106 949 623
- CN-A- 107 300 231
- CN-A- 110 793 088
- CN-A- 114 046 603
- US-A1- 2011 203 298

## Description

The present application claims priority to the Chinese Patent Application No. 202111246608.9, filed with China National Intellectual Property Administration on October 26, 2021, and entitled "METHOD AND APPARATUS FOR FREQUENCY REGULATION AND HOT WATER CONTROL, TERMINAL APPARATUS, AND STORAGE MEDIUM.

### TECHNICAL FIELD

The present invention relates to the field of heat pump water heating regulation technologies, and in particular, to a control method, a heat pump unit, a control device for frequency regulation, and a storage medium.

### BACKGROUND

In an existing double-supply or triple-supply product, in a water heating mode, after a heat pump unit produces hot water, the hot water is introduced to an inner coil of a water tank through a pipeline, and the hot water flows through the inner coil to exchange heat with water in the water tank. The hot water produced by a heat pump is separated from domestic hot water in the water tank by using the inner coil, and the water temperature of the hot water produced by the heat pump (hereinafter referred to as the heat pump outlet water temperature) needs to be greater than the water temperature in the water tank (hereinafter referred to as the water tank temperature) to ensure normal heating.

A larger temperature difference between the heat pump outlet water temperature and the water tank temperature indicates a faster heating rate of hot water. However, heating efficiency of the water tank temperature is further limited by other factors such as a heat exchange area of the coil. Therefore, there is a limit of heating efficiency improvement by increasing the heat pump outlet water temperature to increase the temperature difference and the heating rate, and energy efficiency of the heat pump unit gradually decreases.

The patent publication no. CN105805953A discloses a compressor control method and a device in a water heating mode. The method comprises the steps of: monitoring the temperature of water in a water tank and the water outlet temperature and/or the water return temperature of a refrigerant-water heat exchanger; calculating a temperature difference value between the water outlet temperature and/or the water return temperature of the refrigerant-water heat exchanger and the temperature of the water in the water tank; and controlling the operation of a compressor according to the obtained temperature difference value.

Although prior art comprises improvements regarding the control of compressors in heating systems, the need for a control method that prevents potential damage to heating system components and provides a response that considers the level of deviation from the desired temperature difference continues.

### SUMMARY

The present invention provides a control method, apparatus and device for frequency regulation, and a storage medium, to improve heating efficiency of a heat pump unit.

According to a first aspect of the present invention, a control method for frequency regulation according to claim 1 is provided. The control method includes: obtaining a first heat pump outlet water temperature and a first water tank temperature, where the first heat pump outlet water temperature is used to represent a temperature of hot water produced by the heat pump unit, and the first water tank temperature is used to represent a temperature of water in the water tank after heat exchange; calculating a temperature difference between the first heat pump outlet water temperature and the first water tank temperature if the first heat pump outlet water temperature is greater than or equal to a first preset value in a first preset time period; controlling, if the temperature difference is greater than or equal to a first threshold, the compressor to perform a frequency limiting operation, and obtaining a second heat pump outlet water temperature, where the second heat pump outlet water temperature is used to represent a temperature of hot water produced by the heat pump unit after the frequency limiting operation; and controlling the compressor to stop the frequency limiting operation if the second heat pump outlet water temperature meets a first preset condition.

The first preset value is used to represent a temperature difference between a maximum heat pump outlet water temperature and a first preset parameter.

The controlling, if the temperature difference is greater than or equal to a first threshold, the compressor to perform a frequency limiting operation, and obtaining a second heat pump outlet water temperature includes: controlling, if the temperature difference is greater than or equal to the first threshold, the compressor to perform a frequency fixing operation, and obtaining the second heat pump outlet water temperature; or controlling, if the temperature difference is greater than or equal to a second threshold, the compressor to perform a frequency reduction operation, and obtaining the second heat pump outlet water temperature, where the second threshold is greater than the first threshold.

In a possible implementation, the controlling, if the temperature difference is greater than or equal to a second threshold, the compressor to perform a frequency reduction operation, and obtaining the second heat pump outlet water temperature includes: controlling, if the temperature difference is greater than or equal to the second threshold, the compressor to perform a frequency reduction operation of a first preset frequency, and obtaining the second heat pump outlet water temperature.

In a possible implementation, after the controlling the compressor to perform a frequency reduction operation of a first preset frequency, and obtaining the second heat pump outlet water temperature, the method further includes: controlling, if the second heat pump outlet water temperature does not meet the first preset condition, the compressor to perform a frequency reduction operation of a second preset frequency until the second heat pump outlet water temperature meets the first preset condition, and then controlling the compressor to stop the frequency reduction operation.

In a possible implementation, the controlling the compressor to stop the frequency limiting operation if the second heat pump outlet water temperature meets a first preset condition includes: controlling the compressor to stop the frequency limiting operation if the second heat pump outlet water temperature is less than or equal to a second preset value in a second preset time period.

In a possible implementation, the second preset value is used to represent a temperature difference between the first preset value and a second preset parameter, and the first preset value is used to represent a temperature difference between a maximum heat pump outlet water temperature and a first preset parameter.

In a possible implementation, before the obtaining a first heat pump outlet water temperature and a first water tank temperature, the method further includes: obtaining a heating instruction and a second water tank temperature, where the second water tank temperature is used to represent a water temperature of the water in the water tank before heat exchange; and controlling, if the second water tank temperature meets a preset starting condition, the compressor based on the heating instruction to perform a frequency raising operation, to enable the heat pump unit to perform a heating operation, where the preset starting condition is used to represent that the second water tank temperature is less than or equal to a preset startup temperature value, and the preset startup temperature value is used to represent a temperature difference between a preset target hot water temperature and a startup return difference temperature.

In a possible implementation, after the obtaining a heating instruction and a second water tank temperature, the method further includes: controlling, if the second water tank temperature meets a preset shutdown condition, the compressor based on the heating instruction to perform a shutdown operation, where the preset shutdown condition is used to represent that the second water tank temperature is greater than or equal to a preset shutdown temperature value, and the preset shutdown temperature value is used to represent a total temperature value of the preset target hot water temperature and a shutdown return difference temperature.

According to a second aspect of the present invention, a heat pump unit according to claim 8 is provided. It comprises a compressor, a water tank and a control apparatus for frequency regulation configured to execute the control method according to anyone of claims 1 to 7. The control apparatus includes: a temperature obtaining module, configured to obtain a first heat pump outlet water temperature and a first water tank temperature, where the first heat pump outlet water temperature is used to represent a temperature of hot water produced by the heat pump unit, and the first water tank temperature is used to represent a temperature of water in the water tank after heat exchange; a calculation module, configured to calculate a temperature difference between the first heat pump outlet water temperature and the first water tank temperature if the first heat pump outlet water temperature is greater than or equal to a first preset value in a first preset time period; a frequency limiting module, configured to control, if the temperature difference is greater than or equal to a first threshold, the compressor to perform a frequency limiting operation, and obtain a second heat pump outlet water temperature, where the second heat pump outlet water temperature is used to represent a temperature of hot water produced by the heat pump unit after the frequency limiting operation; and a control module, configured to control the compressor to stop the frequency limiting operation if the second heat pump outlet water temperature meets a first preset condition.

The first preset value is used to represent a temperature difference between a maximum heat pump outlet water temperature and a first preset parameter.

The frequency limiting module includes: a frequency fixing unit, configured to control, if the temperature difference is greater than or equal to the first threshold, the compressor to perform a frequency fixing operation, and obtain a second heat pump outlet water temperature; and a first frequency reduction unit, configured to control, if the temperature difference is greater than or equal to a second threshold, the compressor to perform a frequency reduction operation, and obtain a second heat pump outlet water temperature, where the second threshold is greater than the first threshold.

In a possible implementation, the first frequency reduction unit is specifically configured to control, if the temperature difference is greater than or equal to the second threshold, the compressor to perform a frequency reduction operation of a first preset frequency, and obtain the second heat pump outlet water temperature.

In a possible implementation, the frequency limiting module further includes: a second frequency reduction unit, configured to control, if the second heat pump outlet water temperature does not meet the first preset condition, the compressor to perform a frequency reduction operation of a second preset frequency until the second heat pump outlet water temperature meets the first preset condition, and then control the compressor to stop the frequency reduction operation.

In a possible implementation, the control module is specifically configured to control the compressor to stop the frequency limiting operation if the second heat pump outlet water temperature is less than or equal to a second preset value in a second preset time period.

In a possible implementation, the second preset value is used to represent a temperature difference between the first preset value and a second preset parameter, and the first preset value is used to represent a temperature difference between a maximum heat pump outlet water temperature and a first preset parameter.

In a possible implementation, the control apparatus for frequency regulation further includes: an instruction obtaining module, configured to obtain a heating instruction and a second water tank temperature, where the second water tank temperature is used to represent a water temperature of the water in the water tank before heat exchange; and a heating module, configured to control, if the second water tank temperature meets a preset starting condition, the compressor based on the heating instruction to perform a frequency raising operation, to enable the heat pump unit to perform a heating operation, where the preset starting condition is used to represent that the second water tank temperature is less than or equal to a preset startup temperature value, and the preset startup temperature value is used to represent a temperature difference between a preset target hot water temperature and a startup return difference temperature.

In a possible implementation, the control apparatus for frequency regulation further includes: a shutdown module, configured to control, if the second water tank temperature meets a preset shutdown condition, the compressor based on the heating instruction to perform a shutdown operation, where the preset shutdown condition is used to represent that the second water tank temperature is greater than or equal to a preset shutdown temperature value, and the preset shutdown temperature value is used to represent a total temperature value of the preset target hot water temperature and a shutdown return difference temperature.

According to a third aspect of the present invention, a control device for frequency regulation is provided, and includes: a memory and at least one processor, where instructions are stored in the memory; and the at least one processor invokes the instructions in the memory, so that the control device for frequency regulation performs the control method for frequency regulation according to anyone of claims 1 to 7.

According to a fourth aspect of the present invention, a computer-readable storage medium is provided, where instructions are stored on the computer-readable storage medium, and when the instructions are run on the control device for frequency regulation, the control device for frequency regulation is enabled to perform the control method for frequency regulation according to anyone of claims 1 to 7.

In the technical solution according to the present invention, a first heat pump outlet water temperature and a first water tank temperature are obtained, where the first heat pump outlet water temperature is used to represent a temperature of hot water produced by the heat pump unit, and the first water tank temperature is used to represent a temperature of water in the water tank after heat exchange; a temperature difference between the first heat pump outlet water temperature and the first water tank temperature is calculated if the first heat pump outlet water temperature is greater than or equal to a first preset value in a first preset time period; if the temperature difference is greater than or equal to a first threshold, the compressor is controlled to perform a frequency limiting operation, and a second heat pump outlet water temperature is obtained, where the second heat pump outlet water temperature is used to represent a temperature of hot water produced by the heat pump unit after the frequency limiting operation; and the compressor is controlled to stop the frequency limiting operation if the second heat pump outlet water temperature meets a first preset condition. In the embodiments of the present invention, when the first heat pump outlet water temperature is greater than or equal to the first preset value in the first preset time period, the compressor is controlled to perform the frequency limiting operation based on the temperature difference between the first heat pump outlet water temperature and the first water tank temperature. The foregoing control method can achieve the following beneficial effects: 1) When the water temperature is relatively low, heating efficiency of the heat pump unit can be improved and maintained; when the water temperature is relatively high, it can be ensured that the heat pump unit always runs in a range of high energy efficiency, and the heating efficiency of the water tank can be ensured. 2) The foregoing control method can solve the problems, for example, that after long-term use of a water tank coil, a scaling layer is produced, and a heat exchange capacity is lowered; thus the heat pump unit continuously increases the outlet water temperature of the heat pump to quickly increase the water temperature, resulting in a low heating rate and low energy efficiency of the heat pump unit.

### BRIEF DESCRIPTION OF DRAWINGS

FIG. 1 is a schematic diagram of a control method for frequency regulation in an embodiment of the present invention;
FIG. 2 is a schematic diagram showing a heat pump outlet water temperature and efficiency in an embodiment of the present invention;
FIG. 3 is a schematic diagram showing a temperature difference and a heat exchange rate of a water tank in an embodiment of the present invention;
FIG. 4 is a schematic diagram showing changes of a compressor frequency, a heat pump inlet water temperature, a heat pump outlet water temperature and a water tank temperature with time in an embodiment of the present invention;
FIG. 5 is a schematic diagram showing a value range of a first threshold in an embodiment of the present invention;
FIG. 6 is a schematic diagram of a control method for frequency regulation in another embodiment of the present invention;
FIG. 7 is a schematic diagram of a control apparatus for frequency regulation in an embodiment of the present invention;
FIG. 8 is a schematic diagram of a control apparatus for frequency regulation in another embodiment of the present invention; and
FIG. 9 is a schematic diagram of a control device for frequency regulation in an embodiment of the present invention.

### DESCRIPTION OF EMBODIMENTS

The present invention provides a control method, apparatus and device for frequency regulation, and a storage medium, to improve heating efficiency of a heat pump unit.

The terms "first", "second", "third", "fourth", etc. (if any) in the description, claims, and the foregoing accompanying drawings of the present invention are used to distinguish between similar objects and are not necessarily used to describe a specific order or sequence. It should be understood that terms used in such a way may be interchanged under appropriate circumstances so that the embodiments described herein can be implemented in an order other than the content illustrated or described herein. In addition, the terms "include" or "have" and any variation thereof are intended to cover a non-exclusive inclusion, for example, a process, method, system, product, or device that includes a series of steps or units is not necessarily limited to those steps or units that are explicitly listed, but may include other steps or units not explicitly listed or inherent to such a process, method, product or device.

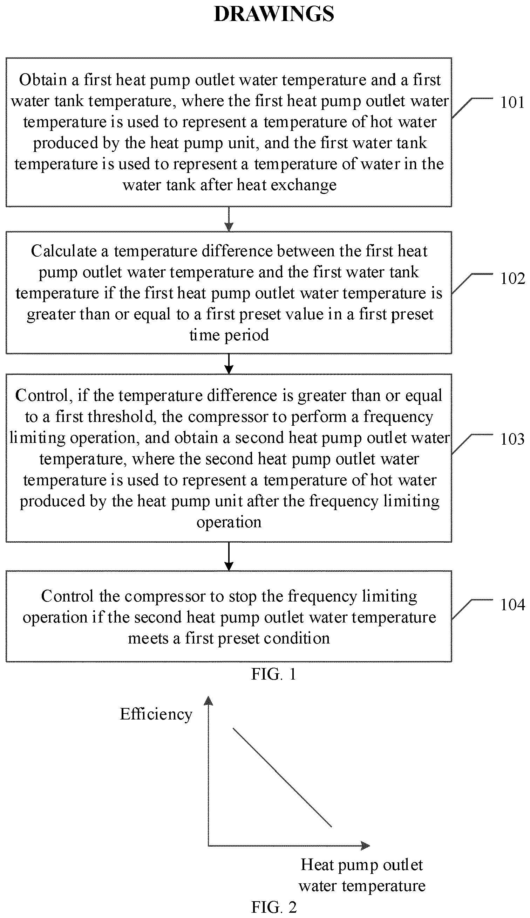

For ease of understanding, the following describes a specific process of an embodiment of the present invention. With reference to FIG. 1, a control method for frequency regulation in an embodiment of the present invention includes the following steps.

Step 101: Obtain a first heat pump outlet water temperature and a first water tank temperature, where the first heat pump outlet water temperature is used to represent a temperature of hot water produced by the heat pump unit, and the first water tank temperature is used to represent a temperature of water in the water tank after heat exchange.

It can be understood that an executing body in the present invention may be a control apparatus for frequency regulation or a control device for frequency regulation, which is not limited herein. This embodiment of the present invention is described by taking an example in which a control apparatus for frequency regulation is an executing body.

During water heating by the heat pump unit, as shown in FIG. 2, there is an approximately negative correlation between a heat pump outlet water temperature and efficiency of a heat pump, that is, a higher heat pump outlet water temperature indicates lower efficiency of the heat pump unit.

Step 102: Calculate a temperature difference between the first heat pump outlet water temperature and the first water tank temperature if the first heat pump outlet water temperature is greater than or equal to a first preset value in a first preset time period.

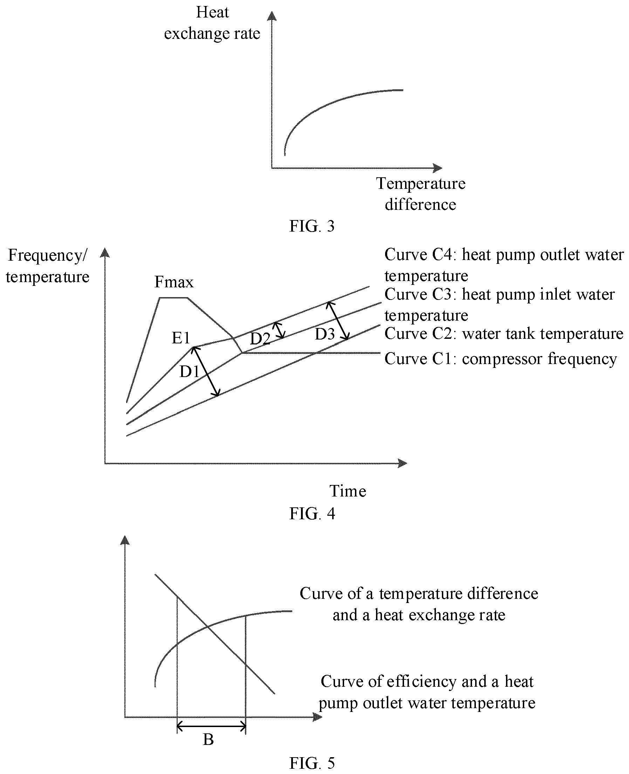

FIG. 3 shows a relationship between a temperature difference between a heat pump outlet water temperature and a water tank temperature and a heat exchange rate of a water tank. When the temperature difference at an earlier stage is relatively smaller, the heat exchange rate is relatively high, but when the temperature difference becomes larger, the heat exchange rate approaches a saturation value with the increase of the temperature difference since a contact area between the coil of the heat pump unit and the water in the water tank is certain.

Based on FIG. 2 and FIG. 3, a higher heat pump outlet water temperature indicates lower efficiency of the heat pump unit. Based on the existing method, to make the water tank temperature quickly reach a preset target hot water temperature, the heat pump unit maintains a maximum compressor frequency at first to increase the heat pump outlet water temperature and the temperature difference between the heat pump outlet water temperature and the water tank temperature. However, when the temperature difference reaches a certain level, as shown in FIG. 3, the heat exchange rate of the water tank tends to be a saturation value. In this case, the efficiency of the heat pump unit is relatively low.

FIG. 4 is a schematic diagram showing changes of a compressor frequency, a heat pump inlet water temperature, a heat pump outlet water temperature and a water tank temperature with time during operation of a heat pump unit, where C1 represents a curve of the compressor frequency; when a system is started at an initial stage, the compressor frequency gradually rises and reaches a maximum operation frequency of the compressor at a current ambient temperature, and subsequently the compressor performs a frequency limiting operation; C2 represents a curve of the water tank temperature, and the water tank temperature gradually increases with time; C3 represents a curve of the heat pump inlet water temperature, and the temperature also gradually increases with time; because a pipeline of the heat pump unit is a closed cycle, as the heat pump outlet water temperature rises, a return water temperature also rises, that is, the heat pump inlet water temperature also rises; C4 represents a curve of the heat pump outlet water temperature, and the heat pump outlet water temperature continuously increases with time; and a point E1 is used to represent that the compressor performs a frequency limiting operation.

For example, analysis starts before the point E1, and when the curve C4 of the heat pump outlet water temperature continuously rises, the curve C2 of the water tank temperature rises at a steady rate. After the point E1, the heat pump outlet water temperature is much greater than the water tank temperature. In this case, increasing the heat pump outlet water temperature as a mode of quickly increasing the water tank temperature is equivalent to using a high-power heat pump unit to heat a small-capacity water tank. Although the heat pump outlet water temperature of the heat pump unit is very high, the rise of the water tank temperature is not obvious due to the limitation by a heat exchange area of a coil of the small-capacity water tank, and the heat exchange efficiency is reduced in this case.

Step 103: Control, if the temperature difference is greater than or equal to a first threshold, the compressor to perform a frequency limiting operation, and obtain a second heat pump outlet water temperature, where the second heat pump outlet water temperature is used to represent a temperature of hot water produced by the heat pump unit after the frequency limiting operation.

Specifically, θT may be used to represent the temperature difference, and a parameter B may be used to represent the first threshold. Based on FIG. 2 and FIG. 3, FIG. 5 is obtained. For example, the first threshold is in a value range of being greater than or equal to 10°C and less than or equal to 20°C. The specific first threshold may be set based on an actual application scenario.

Step 104: Control the compressor to stop the frequency limiting operation if the second heat pump outlet water temperature meets a first preset condition.

The frequency limiting operation includes a frequency fixing operation and frequency reduction operation, where the frequency fixing operation may be understood as controlling the compressor to keep the current operation frequency.

In the embodiments of the present invention, when the first heat pump outlet water temperature is greater than or equal to the first preset value in the first preset time period, the compressor is controlled to perform the frequency limiting operation based on the temperature difference between the first heat pump outlet water temperature and the first water tank temperature. The foregoing control method can achieve the following beneficial effects: 1) When the water temperature is relatively low, heating efficiency of the heat pump unit can be improved and maintained; when the water temperature is relatively high, it can be ensured that the heat pump unit always runs in a range of high energy efficiency, and the heating efficiency of the water tank can be ensured. 2) The foregoing control method can solve the problems, for example, that after long-term use of a water tank coil, a scaling layer is produced, and a heat exchange capacity is lowered, so that the heat pump unit continuously increases the outlet water temperature of the heat pump to quickly increase the water temperature, resulting in a low heating rate and low energy efficiency of the heat pump unit.

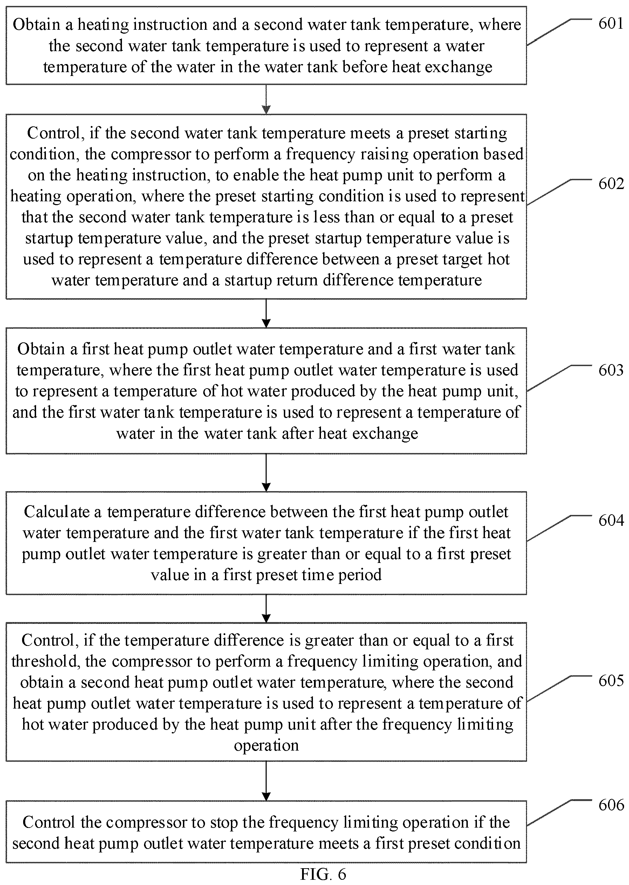

Referring to FIG. 6, a control method for frequency regulation in another embodiment of the present invention includes the following steps.

Step 601: Obtain a heating instruction and a second water tank temperature, where the second water tank temperature is used to represent a water temperature of the water in the water tank before heat exchange.

In a water heating mode, a heat pump unit first determines whether to start a compressor by using a water tank temperature and a set target hot water temperature. For example, a user may set the target hot water temperature by using a mobile terminal or device. The water tank temperature may be obtained in real time by placing a temperature probe in the water tank.

Step 602: Control, if the second water tank temperature meets a preset starting condition, the compressor based on the heating instruction to perform a frequency raising operation, to enable the heat pump unit to perform a heating operation, where the preset starting condition is used to represent that the second water tank temperature is less than or equal to a preset startup temperature value, and the preset startup temperature value is used to represent a temperature difference between a preset target hot water temperature and a startup return difference temperature.

The control apparatus for frequency regulation controls the compressor based on the heating instruction to perform the frequency raising operation, that is, constant temperature startup or starting of the compressor. The constant temperature startup is suitable for a case where hot water is in the water tank. However, to prevent the water temperature from being excessively low, the compressor is started to keep the water temperature near a set target hot water temperature, thereby playing a role of heat preservation. For example, the preset target hot water temperature may be in a value range of being greater than or equal to 10°C and less than or equal to 80°C. The specific target hot water temperature may be set based on an actual application scenario. The startup return difference temperature may be in a value range of being greater than or equal to 0°C and less than or equal to 10°C. The specific startup return difference temperature may be set based on an actual application scenario. For another example, if the preset target hot water temperature is 50°C, and the startup return difference temperature is 6°C, the preset startup temperature value is 50 - 6 = 44°C.

Step 603: Obtain a first heat pump outlet water temperature and a first water tank temperature, where the first heat pump outlet water temperature is used to represent a temperature of hot water produced by the heat pump unit, and the first water tank temperature is used to represent a temperature of water in the water tank after heat exchange.

A double-supply or triple-supply heat pump unit uses a coil to heat the water in the water tank. The heat pump outlet water temperature is greater than the water tank temperature before the water can be heated normally.

Step 604: Calculate a temperature difference between the first heat pump outlet water temperature and the first water tank temperature if the first heat pump outlet water temperature is greater than or equal to a first preset value in a first preset time period.

The first preset value is used to represent a temperature difference between a maximum heat pump outlet water temperature and a first preset parameter. It should be noted that the maximum heat pump outlet water temperature is not fixed, and is related to an ambient temperature and the heat pump unit, and the specific maximum heat pump outlet water temperature may be set based on an actual application scenario.

The first preset time period means a time during which the water tank temperature is stable. For example, the first preset time period may be 5s or other duration, and the specific duration may be set based on an actual application scenario.

The setting of the first preset parameter is to prevent a temperature determining condition for performing the frequency limiting operation from being met when the water tank temperature is excessively low.

For example, M is used to represent the maximum heat pump outlet water temperature, and the maximum heat pump outlet water temperature may be in a value range of being greater than or equal to 10°C and less than or equal to 85°C. The maximum heat pump outlet water temperature may be set based on an actual application scenario. A is used to represent the first preset parameter, and the first preset parameter may be in a value range of being greater than or equal to 30°C and less than or equal to 40°C. The first preset parameter may be specifically set based on an actual application scenario. T1 is used to represent the first heat pump outlet water temperature, that is, T1 ≥ M - A.

For another example, if the maximum heat pump outlet water temperature is M = 70°C, and the first preset parameter is A = 35°C, the first preset value is: M - A = 70 - 35 = 35°C. When the first heat pump outlet water temperature is greater than or equal to 35°C in the first preset time period, that is, as shown in FIG. 4, at the point E1 in the curve C4, a compressor frequency limiting stage is entered. Before the point E1, the compressor operates in a mode of conventional heating through compressor frequency raising. After the point E1, the compressor enters a frequency limiting stage. It can be learned from FIG. 5 that the curve C4 shows that after the point E1, the compressor enters a frequency reduction stage of a frequency limiting mode, and a rate of the heat pump outlet water temperature decreases. The first preset parameter A functions to make the heat pump outlet water temperature reach 35°C before the heat pump unit enters the frequency limiting mode, so as to avoid entering the frequency limiting mode when the heat pump outlet water temperature is still relatively low.

In a feasible implementation, the first preset value may be used as a threshold. The threshold is set based on the heat pump outlet water temperature, that is, the compressor frequency limiting mode can be triggered only when the threshold of the frequency limiting mode in this environment is reached, so as to prevent a case where premature adjustment is performed, so that the compressor performs a frequency fixing operation or a frequency reduction operation, making the water tank temperature rise excessively slowly.

Step 605: Control, if the temperature difference is greater than or equal to a first threshold, the compressor to perform a frequency limiting operation, and obtain a second heat pump outlet water temperature, where the second heat pump outlet water temperature is used to represent a temperature of hot water produced by the heat pump unit after the frequency limiting operation.

Specifically, 1) if the temperature difference is greater than or equal to the first threshold, the control apparatus for frequency regulation controls the compressor to perform a frequency fixing operation, and obtains the second heat pump outlet water temperature.

It can be understood that θT may be used to represent the temperature difference, and the parameter B may be used to represent the first threshold, that is, θT ≥ B. For example, the first threshold may be in a value range of being greater than or equal to 10°C and less than or equal to 20°C. The specific first threshold may be set based on an actual application scenario.

For another example, the first threshold is 15°C, and if the temperature difference θT is greater than or equal to 15°C, the control apparatus for frequency regulation controls the compressor to perform a frequency fixing operation, and obtains a second heat pump outlet water temperature. The frequency fixing operation may be understood as controlling the compressor to keep a current operation frequency. If the current operation frequency is 100 Hz, the control apparatus for frequency regulation controls the compressor to keep the operation frequency at 100 Hz, and the operation frequency may be 100 Hz, 90 Hz or 80 Hz. The specific operation frequency may be set based on an actual application scenario.

2) If the temperature difference is greater than or equal to a second threshold, the control apparatus for frequency regulation controls the compressor to perform a frequency reduction operation, and obtains the second heat pump outlet water temperature, where the second threshold is greater than the first threshold, specifically including: If the temperature difference is greater than or equal to the second threshold, the control apparatus for frequency regulation controls the compressor to perform a frequency reduction operation of a first preset frequency, and obtains the second heat pump outlet water temperature.

Specifically, if the first threshold is 15°C, the second threshold may be 17°C or 19°C, or if the first threshold is 16°C, the second threshold may be 17°C or 18°C, as long as the second threshold is greater than the first threshold. If the temperature difference θT is greater than or equal to 17°C, the control apparatus for frequency regulation controls the compressor to perform a frequency reduction operation of the first preset frequency, and obtains the second heat pump outlet water temperature. The first preset frequency may be 6 Hz or 8 Hz, and the specific first preset frequency may be set based on an actual application scenario.

Step 606: Control the compressor to stop the frequency limiting operation if the second heat pump outlet water temperature meets a first preset condition.

Specifically, the control apparatus for frequency regulation controls the compressor to stop the frequency limiting operation if the second heat pump outlet water temperature is less than or equal to a second preset value in a second preset time period. The second preset value is used to represent a temperature difference between the first preset value and a second preset parameter, and the first preset value is used to represent a temperature difference between a maximum heat pump outlet water temperature and a first preset parameter.

The second preset time period means a time during which the water tank temperature is stable, and the second preset time period may be the same as or different from the first preset time period in duration. For example, the second preset time period may be 5s, 10s or 15s in duration, and the specific duration may be set based on an actual application scenario.

For example, M is used to represent the maximum heat pump outlet water temperature, and the maximum heat pump outlet water temperature may be in a value range of being greater than or equal to 10°C and less than or equal to 85°C. The maximum heat pump outlet water temperature may be specifically set based on an actual application scenario. A is used to represent the first preset parameter, and the first preset parameter may be in a value range of being greater than or equal to 30°C and less than or equal to 40°C. The specific first preset parameter may be set based on an actual application scenario. C is used to represent the second preset parameter, and the second preset parameter may be in a value range of being greater than 1°C and less than or equal to 10°C. The specific second preset parameter may be set based on an actual application scenario. T2 is used to represent the second heat pump outlet water temperature, that is, T2 ≤ M - A - C.

For another example, if the maximum heat pump outlet water temperature is 80°C, the first preset parameter is 35°C, and the second preset parameter is 5°C, then the second preset value is 80 - 35 - 5 = 40°C.

As shown in FIG. 4, D1 and D3 are temperature differences between the heat pump outlet water temperature and the water tank temperature in different time periods when the heat pump unit performs, during an operation time, the control method protected by the present application; and D2 is a temperature difference between the heat pump outlet water temperature and the heat pump inlet water temperature in a certain time period when the heat pump unit performs, during the operation time, the control method protected by the present application. Before the point E1, and when the curve C4 of the heat pump outlet water temperature continuously rises, the curve C2 of the water tank temperature rises at a steady rate. The compressor frequency limiting stage is entered when the point E1 is reached. The temperature difference between the heat pump outlet water temperature and the water tank temperature is reduced from D1 to D3 in the frequency limiting mode, and the parameter B may be understood as D3 in this case. A difference between the curve C4 and the curve C3 indicates a current heating capacity of the heat pump unit, which may be understood that the temperature difference between the heat pump outlet water temperature and the heat pump inlet water temperature represents a heating capacity of the heat pump unit. When the difference is relatively small, the heating capacity of the heat pump unit is relatively small, and energy efficiency and heating efficiency of the heat pump are also relatively high. When the difference between the heat pump outlet water temperature and the water tank temperature is kept within the range of D3 or the parameter B, and the temperature difference between the heat pump outlet water temperature and the heat pump inlet water temperature is kept at D2, the energy efficiency and heating efficiency of the heat pump are also relatively high, so that the entire heat pump unit is kept in a high energy efficiency range. It can be understood that the temperature difference is kept at the parameter B. In this case, the heat pump unit meets a heating rate of the water tank temperature, which makes the heat pump unit keep high energy efficiency when meeting a heating demand of the user.

In a possible implementation, if the second heat pump outlet water temperature does not meet the first preset condition, the control apparatus for frequency regulation controls the compressor to perform a frequency reduction operation of a second preset frequency until the second heat pump outlet water temperature meets the first preset condition, and then controls the compressor to stop the frequency reduction operation.

It should be noted that the first preset frequency is greater than the second preset frequency, so as to reduce by a relatively high frequency value at the earlier stage to improve energy efficiency of the compressor, and then gradually reduce by a relatively small frequency at the later stage to make the heat pump outlet water temperature meet the first preset condition.

It can be understood that during frequency reduction, the heat pump outlet water temperature and the water tank temperature rise simultaneously, and the frequency reduction is to make the heat pump outlet water temperature rise more slowly, while in this case, a rising speed of the water tank temperature is not affected by the heat pump outlet water temperature. On the one hand, to prevent excessive reduction of a heat capacity of the compressor, the heat pump outlet water temperature rises excessively slowly. On the other hand, the heat pump unit gradually approaches the temperature difference condition, that is, the parameter B, so that the heat pump unit enters a relatively high energy efficiency range.

For example, if the first preset frequency is 6 Hz, the second preset frequency is 4 Hz, or if the first preset frequency is 7 Hz, the second preset frequency is 5 Hz, as long as the first preset frequency is greater than the second preset frequency, and the specific second preset frequency may be set based on an actual application scenario.

For another example, the first preset frequency is 7 Hz, and the second preset frequency is 5 Hz. If the temperature difference is greater than or equal to the second threshold, the control apparatus for frequency regulation controls the compressor to reduce the frequency by 7 Hz, and obtains the second heat pump outlet water temperature. If the second heat pump outlet water temperature does not meet the first preset condition, the control apparatus for frequency regulation controls the compressor to reduce the frequency by 5 Hz, and repeatedly performs the frequency reduction by 5 Hz until the second heat pump outlet water temperature meets the first preset condition, and then controls the compressor to stop the frequency reduction operation.

In a possible implementation, if the second water tank temperature meets a preset shutdown condition, the control apparatus for frequency regulation controls the compressor based on the heating instruction to perform a shutdown operation, where the preset shutdown condition is used to represent that the second water tank temperature is greater than or equal to a preset shutdown temperature value, and the preset shutdown temperature value is used to represent a total temperature value of the preset target hot water temperature and a shutdown return difference temperature.

The control apparatus for frequency regulation controls the compressor based on the heating instruction to perform the shutdown operation, that is, constant temperature shutdown or shutdown of the compressor. The constant temperature shutdown is suitable for a case where the water temperature of the water tank has reached the preset target hot water temperature. However, to prevent the water temperature from being excessively high, the compressor is controlled to be shut down, to keep the water temperature of the water tank near a preset target hot water temperature, thereby playing a role of heat preservation.

For example, the preset target hot water temperature may be in a value range of being greater than or equal to 10°C and less than or equal to 80°C. The specific target hot water temperature may be set based on an actual application scenario. The shutdown return difference temperature may be in a value range of being greater than or equal to 0°C and less than or equal to 10°C. The specific shutdown return difference temperature may be set based on an actual application scenario. For another example, if the preset target hot water temperature is 60°C, and the shutdown return difference temperature is 2°C, the preset shutdown temperature value is 60 -2 = 58°C.

In a feasible implementation, after the heat pump unit performs the heating operation, specifically, (1) the control apparatus for frequency regulation obtains the first heat pump outlet water temperature, and calculates a target temperature difference between a third preset value and the first heat pump outlet water temperature, where the third preset value is used to indicate a temperature difference between the maximum heat pump outlet water temperature and a third preset parameter; (2) the control apparatus for frequency regulation obtains a target value based on a preset formula and the target temperature difference; (3) if the target value is greater than or equal to a preset value, the control apparatus for frequency regulation controls the compressor to perform a frequency raising operation; and (4) if the target value is less than the preset value, the control apparatus for frequency regulation controls the compressor to perform a frequency reduction operation.

It should be noted that Erro is used to represent the target temperature difference between the third preset value and the first heat pump outlet water temperature, M is used to represent the maximum heat pump outlet water temperature, T1 is used to represent the first heat pump outlet water temperature, and F is used to represent the third preset parameter. The value of F may be 2°C or 3°C, and the specific third preset parameter may be set based on an actual application scenario, that is, Erro = M - F - T1, and the purpose of subtracting the third preset parameter from the maximum heat pump outlet water temperature is to prevent a case where protection against an excessive water temperature or high voltage protection is issued when the first heat pump outlet water temperature is close to the maximum heat pump outlet water temperature.

The preset formula is: target value PIDsum = P + I + D, and a calculation cycle of PIDsum may be 1 min or 2 min. The specific calculation cycle may be set based on an actual application scenario, where P = kp * Erro, I = I' + ki * Erro, an initial value of I' is 0, and I' represents a value I obtained in the last calculation cycle, D = kd * (Erro - Erro'), where Erro' represents Erro in the last calculation cycle, and the value of kp may be 3, that is, kp = 3, or may be 4, that is, kp = 4, and the specific kp may be set based on an actual application scenario; the value of ki may be 0.5, that is, ki = 0.5, or may be 0.6, that is, ki = 0.6, and the specific ki may be set based on an actual application scenario; the value of kd may be 6, that is, kd = 6, or may be 7, that is, kd = 7, and the specific kd may be set based on an actual application scenario.

PIDsum' is used to represent the preset value, and PIDsum' represents a PIDsum value obtained in the last calculation cycle. When PIDsum ≥ PIDsum', the control apparatus for frequency regulation controls the compressor to perform a frequency raising operation. When PIDsum < PIDsum', the control apparatus for frequency regulation controls the compressor to perform a frequency reduction operation. In a feasible implementation, the target temperature difference between the third preset value and the first heat pump outlet water temperature may be expressed by a temperature difference between the maximum heat pump inlet water temperature and the heat pump inlet water temperature.

A PIDsum algorithm is used to calculate a change in total energy demand of the heat pump unit, and then a frequency raising operation or a frequency reduction operation is performed. Such a compressor control process is more accurate. The calculation and prediction of the heating demand of the user side by using the PIDsum algorithm ensures that the heating demand of the user is met, and ensures the energy efficiency of the unit.

In a feasible implementation, the PIDsum algorithm may also be executed only when the frequency limiting mode is entered. The PIDsum algorithm is executed when the frequency limiting operation is performed. With reference to a change in water temperature during the frequency limiting operation, the PIDsum algorithm is used to calculate a change in total energy demand of the heat pump unit, and then a frequency reduction operation is performed. Such a compressor control process is more accurate, fully ensuring that the heating demand of the user is met.

In the embodiments of the present invention, when the first heat pump outlet water temperature is greater than or equal to the first preset value in the first preset time period, the compressor is controlled to perform the frequency limiting operation based on the temperature difference between the first heat pump outlet water temperature and the first water tank temperature. The foregoing control method can achieve the following beneficial effects: 1) When the water temperature is relatively low, heating efficiency of the heat pump unit can be improved and maintained; when the water temperature is relatively high, it can be ensured that the heat pump unit always runs in a range of high energy efficiency, and the heating efficiency of the water tank can be ensured. 2) The foregoing control method can solve the problems, for example, that after long-term use of a water tank coil, a scaling layer is produced, and a heat exchange capacity is lowered, so that the heat pump unit continuously increases the outlet water temperature of the heat pump to quickly increase the water temperature, resulting in a low heating rate and low energy efficiency of the heat pump unit.

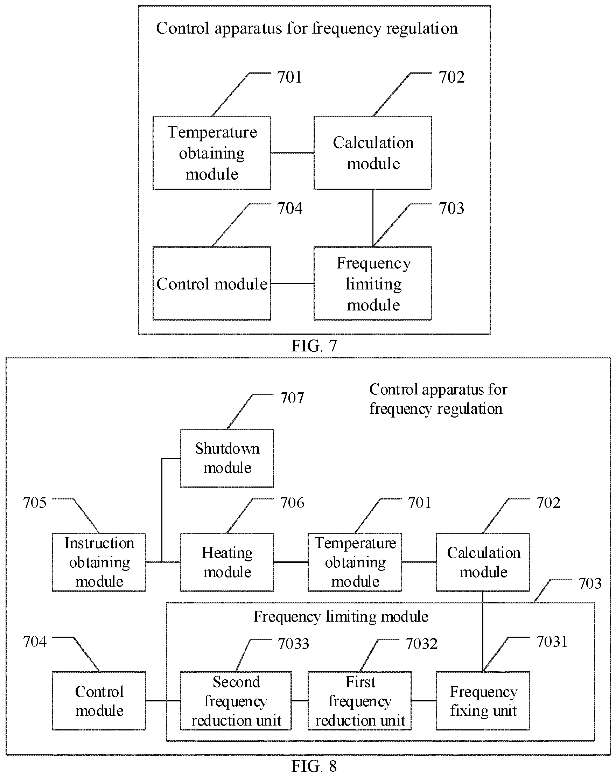

The control method for frequency regulation in the embodiment of the present invention is described above, and the following describes a control apparatus for frequency regulation in an embodiment of the present invention. With reference to FIG. 7, a control apparatus for frequency regulation in an embodiment of the present invention includes:
a temperature obtaining module 701, configured to obtain a first heat pump outlet water temperature and a first water tank temperature, where the first heat pump outlet water temperature is used to represent a temperature of hot water produced by the heat pump unit, and the first water tank temperature is used to represent a temperature of water in the water tank after heat exchange;
a calculation module 702, configured to calculate a temperature difference between the first heat pump outlet water temperature and the first water tank temperature if the first heat pump outlet water temperature is greater than or equal to a first preset value in a first preset time period;
a frequency limiting module 703, configured to control, if the temperature difference is greater than or equal to a first threshold, the compressor to perform a frequency limiting operation, and obtain a second heat pump outlet water temperature, where the second heat pump outlet water temperature is used to represent a temperature of hot water produced by the heat pump unit after the frequency limiting operation; and
a control module 704, configured to control the compressor to stop the frequency limiting operation if the second heat pump outlet water temperature meets a first preset condition.

In the embodiments of the present invention, when the first heat pump outlet water temperature is greater than or equal to the first preset value in the first preset time period, the compressor is controlled to perform the frequency limiting operation based on the temperature difference between the first heat pump outlet water temperature and the first water tank temperature. The foregoing control method can achieve the following beneficial effects: 1) When the water temperature is relatively low, heating efficiency of the heat pump unit can be improved and maintained; when the water temperature is relatively high, it can be ensured that the heat pump unit always runs in a range of high energy efficiency, and the heating efficiency of the water tank can be ensured. 2) The foregoing control method can solve the problems, for example, that after long-term use of a water tank coil, a scaling layer is produced, and a heat exchange capacity is lowered, so that the heat pump unit continuously increases the outlet water temperature of the heat pump to quickly increase the water temperature, resulting in a low heating rate and low energy efficiency of the heat pump unit.

Referring to FIG. 8, a control apparatus for frequency regulation in another embodiment of the present invention includes:
a temperature obtaining module 701, configured to obtain a first heat pump outlet water temperature and a first water tank temperature, where the first heat pump outlet water temperature is used to represent a temperature of hot water produced by the heat pump unit, and the first water tank temperature is used to represent a temperature of water in the water tank after heat exchange;
a calculation module 702, configured to calculate a temperature difference between the first heat pump outlet water temperature and the first water tank temperature if the first heat pump outlet water temperature is greater than or equal to a first preset value in a first preset time period;
a frequency limiting module 703, configured to control, if the temperature difference is greater than or equal to a first threshold, the compressor to perform a frequency limiting operation, and obtain a second heat pump outlet water temperature, where the second heat pump outlet water temperature is used to represent a temperature of hot water produced by the heat pump unit after the frequency limiting operation; and
a control module 704, configured to control the compressor to stop the frequency limiting operation if the second heat pump outlet water temperature meets a first preset condition.

The first preset value is used to represent a temperature difference between a maximum heat pump outlet water temperature and a first preset parameter.

The frequency limiting module 703 includes:
a frequency fixing unit 7031, configured to control, if the temperature difference is greater than or equal to the first threshold, the compressor to perform a frequency fixing operation, and obtain the second heat pump outlet water temperature; and
a first frequency reduction unit 7032, configured to control, if the temperature difference is greater than or equal to a second threshold, the compressor to perform a frequency reduction operation, and obtain the second heat pump outlet water temperature, where the second threshold is greater than the first threshold.

Optionally, the first frequency reduction unit 7032 is specifically configured to:
control, if the temperature difference is greater than or equal to the second threshold, the compressor to perform a frequency reduction operation of a first preset frequency, and obtain the second heat pump outlet water temperature.

Optionally, the frequency limiting module 703 further includes:
a second frequency reduction unit 7033, configured to control, if the second heat pump outlet water temperature does not meet the first preset condition, the compressor to perform a frequency reduction operation of a second preset frequency until the second heat pump outlet water temperature meets the first preset condition, and then control the compressor to stop the frequency reduction operation.

Optionally, the control module 704 is specifically configured to:
control the compressor to stop the frequency limiting operation if the second heat pump outlet water temperature is less than or equal to a second preset value in a second preset time period.

Optionally, the second preset value is used to represent a temperature difference between the first preset value and a second preset parameter, and the first preset value is used to represent a temperature difference between a maximum heat pump outlet water temperature and a first preset parameter.

Optionally, the control apparatus for frequency regulation further includes:
an instruction obtaining module 705, configured to obtain a heating instruction and a second water tank temperature, where the second water tank temperature is used to represent a water temperature of the water in the water tank before heat exchange; and
a heating module 706, configured to control, if the second water tank temperature meets a preset starting condition, the compressor based on the heating instruction to perform a frequency raising operation, to enable the heat pump unit to perform a heating operation, where the preset starting condition is used to represent that the second water tank temperature is less than or equal to a preset startup temperature value, and the preset startup temperature value is used to represent a temperature difference between a preset target hot water temperature and a startup return difference temperature.

Optionally, the control apparatus for frequency regulation further includes:
a shutdown module 707, configured to control, if the second water tank temperature meets a preset shutdown condition, the compressor based on the heating instruction to perform a shutdown operation, where the preset shutdown condition is used to represent that the second water tank temperature is greater than or equal to a preset shutdown temperature value, and the preset shutdown temperature value is used to represent a total temperature value of the preset target hot water temperature and a shutdown return difference temperature.

In the embodiments of the present invention, when the first heat pump outlet water temperature is greater than or equal to the first preset value in the first preset time period, the compressor is controlled to perform the frequency limiting operation based on the temperature difference between the first heat pump outlet water temperature and the first water tank temperature. The foregoing control method can achieve the following beneficial effects: 1) When the water temperature is relatively low, heating efficiency of the heat pump unit can be improved and maintained; when the water temperature is relatively high, it can be ensured that the heat pump unit always runs in a range of high energy efficiency, and the heating efficiency of the water tank can be ensured. 2) The foregoing control method can solve the problems, for example, that after long-term use of a water tank coil, a scaling layer is produced, and a heat exchange capacity is lowered, so that the heat pump unit continuously increases the outlet water temperature of the heat pump to quickly increase the water temperature, resulting in a low heating rate and low energy efficiency of the heat pump unit.

FIG. 7 and FIG. 8 describe the control apparatus for frequency regulation in this embodiment of the present invention in detail in the perspective of modular functional entities, and a control device for frequency regulation in an embodiment of the present invention is described in detail below in the perspective of hardware processing.

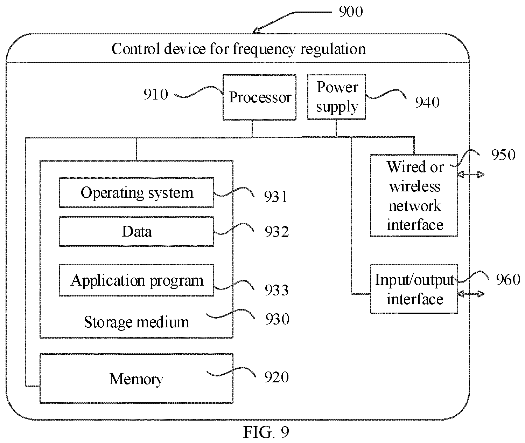

FIG. 9 is a schematic structural diagram of a control device for frequency regulation in an embodiment of the present invention. The control device 900 for frequency regulation may vary greatly due to different configurations or performances, and may include one or more central processing units (CPUs) 910 (for example, one or more processors), a memory 920, and one or more storage media 930 (for example, one or more mass storage devices) for storing application programs 933 or data 932. The memory 920 and the storage medium 930 may be used for transient storage or persistent storage. The program stored on the storage medium 930 may include one or more modules (not shown), and each module may include a series of instruction operations in the control device 900 for frequency regulation. Further, the processor 910 may be configured to communicate with the storage medium 930 and execute, on the control device 900 for frequency regulation, a series of instruction operations in the storage medium 930.

The control device 900 for frequency regulation may further include one or more power supplies 940, one or more wired or wireless network interfaces 950, one or more input/output interfaces 960, and/or one or more operating systems 931, such as Windows Server, Mac OS X, Unix, Linux, and FreeBSD. It can be understood by a person skilled in the art that the structure of the control device for frequency regulation shown in FIG. 9 does not constitute a limitation on the control device for frequency regulation, and may include more or fewer components than those shown, or combine some components, or have different component arrangements.

The present invention further provides a control device for frequency regulation. A computer device includes a memory and a processor, where computer-readable instructions are stored in the memory, and when the computer-readable instructions are executed by the processor, the processor is enabled to perform the steps of the control method for frequency regulation in each of the foregoing embodiments.

The present invention further provides a computer-readable storage medium, which may be a nonvolatile computer-readable storage medium or a volatile computer-readable storage medium, where instructions are stored in the computer-readable storage medium, and when the instructions are run on a control device for frequency regulation, the control device for frequency regulation performs the steps of the control method for frequency regulation.

A person skilled in the art can clearly understand that for ease and conciseness of the description, for the specific operating processes of the foregoing system, apparatus, and units, refer to the corresponding processes in the foregoing method embodiments. Details are not described herein again.

The integrated unit may be stored in a computer-readable storage medium if implemented in the form of a software functional unit and sold or used as an independent product. Based on such understanding, the technical solutions of the present invention essentially or the part contributing to the prior art or the whole or part of the technical solution may be implemented in a form of a software product. The computer software product is stored in a storage medium, and includes several instructions for enabling a computer device (which may be a personal computer, a server, a network device, or the like) to perform all or some steps of the method according to each of the embodiments of the present invention. The foregoing storage medium includes various media that can store program code, such as a USB flash drive, a mobile hard disk, a read only memory (ROM), a random access memory (RAM), a magnetic disk, or a compact disc.

The foregoing embodiments are only used to illustrate the technical solutions of the present invention, and are not intended to limit the technical solutions. Although the present invention has been described in detail with reference to the foregoing embodiments, a person of ordinary skill in the art should understand that he/she can still modify the technical solutions described in each foregoing embodiment, or perform equivalent replacements on some of the technical features within the scope of the invention that is defined in the appended claims.

## Claims

1. A control method for frequency regulation,
wherein the control method is applied to a heat pump unit, the heat pump unit comprises at least a compressor and a water tank, and the control method for frequency regulation comprises the following steps:
obtaining (101) a first heat pump outlet water temperature and a first water tank temperature, wherein the first heat pump outlet water temperature is used to represent a temperature of hot water produced by the heat pump unit, and the first water tank temperature is used to represent a temperature of water in the water tank after heat exchange with the hot water produced by the heat pump unit;
calculating (102) a temperature difference between the first heat pump outlet water temperature and the first water tank temperature if the first heat pump outlet water temperature is greater than or equal to a first preset value in a first preset time period;
controlling (103), if the temperature difference is greater than or equal to a first threshold, the compressor to perform a frequency limiting operation, and obtaining a second heat pump outlet water temperature, wherein the second heat pump outlet water temperature is used to represent a temperature of hot water produced by the heat pump unit after the frequency limiting operation; and
controlling (104) the compressor to stop the frequency limiting operation if the second heat pump outlet water temperature meets a first preset condition
**characterized in that**
the first preset value is used to represent a temperature difference between a maximum heat pump outlet water temperature and a first preset parameter and
the controlling, if the temperature difference is greater than or equal to a first threshold, the compressor to perform a frequency limiting operation, and obtaining a second heat pump outlet water temperature comprises:
controlling, if the temperature difference is greater than or equal to the first threshold, the compressor to perform a frequency fixing operation, and obtaining the second heat pump outlet water temperature; or
controlling, if the temperature difference is greater than or equal to a second threshold, the compressor to perform a frequency reduction operation, and obtaining the second heat pump outlet water temperature, wherein the second threshold is greater than the first threshold.

2. The control method for frequency regulation according to claim 1, **characterized in that** the controlling, if the temperature difference is greater than or equal to a second threshold, the compressor to perform a frequency reduction operation, and obtaining the second heat pump outlet water temperature comprises:
controlling, if the temperature difference is greater than or equal to the second threshold, the compressor to perform a frequency reduction operation of a first preset frequency, and obtaining the second heat pump outlet water temperature.

3. The control method for frequency regulation according to claim 2, **characterized in that** after the controlling the compressor to perform a frequency reduction operation of a first preset frequency, and obtaining the second heat pump outlet water temperature, the method further comprises:
controlling, if the second heat pump outlet water temperature does not meet the first preset condition, the compressor to perform a frequency reduction operation of a second preset frequency until the second heat pump outlet water temperature meets the first preset condition, and then controlling the compressor to stop the frequency reduction operation.

4. The control method for frequency regulation according to claim 1, **characterized in that** the controlling the compressor to stop the frequency limiting operation if the second heat pump outlet water temperature meets a first preset condition comprises:
controlling the compressor to stop the frequency limiting operation if the second heat pump outlet water temperature is less than or equal to a second preset value in a second preset time period.

5. The control method for frequency regulation according to claim 4, **characterized in that** the second preset value is used to represent a temperature difference between the first preset value and a second preset parameter, and the first preset value is used to represent a temperature difference between a maximum heat pump outlet water temperature and a first preset parameter.

6. The control method for frequency regulation according to any one of claims 1 to 6, **characterized in that** before the obtaining a first heat pump outlet water temperature and a first water tank temperature, the method further comprises:
obtaining (601) a heating instruction and a second water tank temperature, wherein the second water tank temperature is used to represent a water temperature of the water in the water tank before heat exchange; and
controlling (602), if the second water tank temperature meets a preset starting condition, the compressor based on the heating instruction to perform a frequency raising operation, to enable the heat pump unit to perform a heating operation, wherein the preset starting condition is used to represent that the second water tank temperature is less than or equal to a preset startup temperature value, and the preset startup temperature value is used to represent a temperature difference between a preset target hot water temperature and a startup return difference temperature.

7. The control method for frequency regulation according to claim 6, **characterized in that** after the obtaining a heating instruction and a second water tank temperature, the method further comprises:
controlling, if the second water tank temperature meets a preset shutdown condition, the compressor based on the heating instruction to perform a shutdown operation, wherein the preset shutdown condition is used to represent that the second water tank temperature is greater than or equal to a preset shutdown temperature value, and the preset shutdown temperature value is used to represent a total temperature value of the preset target hot water temperature and a shutdown return difference temperature.

8. A heat pump unit comprising a compressor, a water tank and a control apparatus for frequency regulation configured to execute the control method according to anyone of claims 1 to 7, the control apparatus comprising:
a temperature obtaining module (701), configured to obtain a first heat pump outlet water temperature and a first water tank temperature, wherein the first heat pump outlet water temperature is used to represent a temperature of hot water produced by the heat pump unit, and the first water tank temperature is used to represent a temperature of water in the water tank after heat exchange with the hot water produced by the heat pump unit;
a calculation module (702), configured to calculate a temperature difference between the first heat pump outlet water temperature and the first water tank temperature if the first heat pump outlet water temperature is greater than or equal to a first preset value in a first preset time period;
a frequency limiting module (703), configured to control, if the temperature difference is greater than or equal to a first threshold, the compressor to perform a frequency limiting operation, and obtain a second heat pump outlet water temperature, wherein the second heat pump outlet water temperature is used to represent a temperature of hot water produced by the heat pump unit after the frequency limiting operation; and
a control module (704), configured to control the compressor to stop the frequency limiting operation if the second heat pump outlet water temperature meets a first preset condition
**characterized in that**
the first preset value is used to represent a temperature difference between a maximum heat pump outlet water temperature and a first preset parameter,
and **in that** the frequency limit module includes: a frequency fixing unit (7031), configured to control, if the temperature difference is greater than or equal to the first threshold, the compressor to perform a frequency fixing operation, and obtain a second heat pump outlet water temperature, and a first frequency reduction unit (7032), configured to control, if the temperature difference is greater than or equal to a second threshold, the compressor to perform a frequency reduction operation, and obtain a second heat pump outlet water temperature, where the second threshold is greater than the first threshold.

9. A control device (900) for frequency regulation, **characterized by** comprising a memory (920) and at least one processor (910), wherein instructions are stored in the memory (920); and
the at least one processor (910) invokes the instructions in the memory (920), so that the control device (900) for frequency regulation performs the control method for frequency regulation according to any one of claims 1 to 7.

10. A computer-readable storage medium, **characterized in that** instructions are stored on the computer-readable storage medium, wherein when the instructions are executed by a processor, the control method for frequency regulation according to any one of claims 1 to 7 is implemented.

## Patentansprüche

1. Ein Steuerverfahren zur Frequenzregelung,
wobei das Steuerverfahren auf eine Wärmepumpeneinheit angewendet wird, die Wärmepumpeneinheit mindestens einen Kompressor und einen Wassertank umfasst und das Steuerverfahren zur Frequenzregelung die folgenden Schritte umfasst:
Erfassen (101)
eine erste Wärmepumpenauslasswassertemperatur und eine erste Wassertanktemperatur, wobei die erste Wärmepumpenauslasswassertemperatur verwendet wird, um eine Temperatur des von der Wärmepumpeneinheit erzeugten Warmwassers darzustellen, und die erste Wassertanktemperatur verwendet wird, um eine Temperatur des Wassers im Wassertank nach dem Wärmeaustausch durch das von der Wärmepumpeneinheit erzeugte Warmwasser darzustellen;
Berechnen (102)
einer Temperaturdifferenz zwischen der ersten Wärmepumpenauslasswassertemperatur und der ersten Wassertanktemperatur, wenn die erste Wärmepumpenauslasswassertemperatur in einem ersten voreingestellten Zeitraum größer oder gleich einem ersten voreingestellten Wert ist;
Steuern (103),
des Kompressors, wenn die Temperaturdifferenz größer oder gleich einem ersten Schwellenwert ist, einen Frequenzbegrenzungsbetrieb durchzuführen, und Erhalten einer zweiten Wärmepumpenauslasswassertemperatur, wobei die zweite Wärmepumpenauslasswassertemperatur verwendet wird, um eine Temperatur des von der Wärmepumpeneinheit nach dem Frequenzbegrenzungsbetrieb erzeugten Warmwassers darzustellen; und
Steuern (104)
des Kompressors, damit der Frequenzbegrenzungsbetrieb gestoppt wird, wenn die zweite Wärmepumpenauslasstemeratur eine erste voreingestellte Bedingung erfüllt
**dadurch gekennzeichnet, dass**
der erste voreingestellte Wert verwendet wird, um eine Temperaturdifferenz zwischen einer maximalen Wärmepumpenawasserauslassstemperatur und einem ersten voreingestellten Parameter darzustellen, und
das Steuern des Kompressors, wenn die Temperaturdifferenz größer oder gleich einem ersten Schwellenwert ist, um einen Frequenzbegrenzungsbetrieb durchzuführen, und das Erhalten einer zweiten Wärmepumpenauslasswassertemperatur umfasst:
Steuern des Kompressors, wenn die Temperaturdifferenz größer oder gleich dem ersten Schwellenwert ist, um einen Frequenzfestlegungsbetrieb durchzuführen, und Erhalten der zweiten Wärmepumpenauslasswassertemperatur; oder
Steuern des Kompressors, um einen Frequenzreduzierungsbetrieb durchzuführen, wenn die Temperaturdifferenz größer oder gleich einem zweiten Schwellenwert ist, und Erhalten der zweiten Wärmepumpenauslasswassertemperatur, wobei der zweite Schwellenwert größer als der erste Schwellenwert ist.

2. Ein Steuerverfahren zur Frequenzregelung nach Anspruch 1, **dadurch gekennzeichnet, dass** das Steuern, wenn die Temperaturdifferenz größer oder gleich einem zweiten Schwellenwert ist, den Kompressor dazu veranlasst, einen Frequenzreduzierungsbetrieb durchzuführen, und die zweite Wärmepumpenauslasswassertemperatur umfasst:
Steuern des Kompressors, wenn die Temperaturdifferenz größer oder gleich dem zweiten Schwellenwert ist, um einen Frequenzreduzierungsbetrieb mit einer ersten voreingestellten Frequenz durchzuführen, und Erhalten der zweiten Wärmepumpenauslasswassertemperatur.

3. Steuerverfahren zur Frequenzregelung nach Anspruch 2,
**dadurch gekennzeichnet, dass**
das Verfahren nach dem Steuern des Kompressors zur Durchführung eines Frequenzreduzierungsbetrieb mit einer ersten voreingestellten Frequenz und dem Erhalten der zweiten Wärmepumpenauslasstemperatur ferner umfasst:
Steuern des Kompressors, wenn die zweite Wärmepumpenauslasswassertemperatur e die erste voreingestellte Bedingung nicht erfüllt, um einen Frequenzreduzierungsbetrieb mit einer zweiten voreingestellten Frequenz durchzuführen, bis die zweite Wärmepumpenauslasstemeratur die erste voreingestellte Bedingung erfüllt, und dann Steuern des Kompressors, um den Frequenzreduzierungsbetrieb zu stoppen.

4. Steuerverfahren zur Frequenzregelung nach Anspruch 1, **dadurch gekennzeichnet, dass** das Steuern des Kompressors zum Stoppen des Frequenzbegrenzungsbetriebs, wenn die zweite Wärmepumpenauslasswassertemperatur eine erste voreingestellte Bedingung erfüllt, umfasst:
Steuern des Kompressors, um den Frequenzbegrenzungsbetrieb zu stoppen, wenn die zweite Wärmepumpenauslasstemperatur kleiner oder gleich einem zweiten voreingestellten Wert in einem zweiten voreingestellten Zeitraum ist.

5. Steuerverfahren zur Frequenzregelung nach Anspruch 4,
**dadurch gekennzeichnet, dass**
der zweite voreingestellte Wert verwendet wird, um eine Temperaturdifferenz zwischen dem ersten voreingestellten Wert und einem zweiten voreingestellten Parameter darzustellen, und der erste voreingestellte Wertverwendet wird, um eine Temperaturdifferenz zwischen einer maximalen Wärmepumpenauslasswassertemperatur und einem ersten voreingestellten Parameter darzustellen.

6. Steuerverfahren zur Frequenzregelung nach einem der Ansprüche 1 bis 6, **dadurch gekennzeichnet, dass** das Verfahren vor dem Erfassen einer ersten Wärmepumpenauslasswassertemperatur und einer ersten Wassertanktemperatur ferner umfasst:
Erfassen (601)
einer Heizanweisung und einer zweiten Wassertanktemperatur, wobei die zweite Wassertanktemperatur verwendet wird, um eine Wassertemperatur des Wassers in dem Wassertank vor dem Wärmeaustausch darzustellen; und
Steuern (602),
wenn die zweite Wassertanktemperatur eine voreingestellte Startbedingung erfüllt, das der Kompressor auf Grundlage der Heizanweisung einen Frequenzerhöhungsbetrieb durchführt, um die Wärmepumpeneinheit in die Lage zu versetzen, einen Heizvorgang durchzuführen, wobei die voreingestellte Startbedingung verwendet wird, um darzustellen, dass die zweite Wassertanktemperatur kleiner oder gleich einem voreingestellten Starttemperaturwert ist, und der voreingestellte Starttemperaturwert verwendet wird, um eine Temperaturdifferenz zwischen einer voreingestellten Warmwasser-Solltemperatur und einer Start-Rücklaufdifferenztemperatur darzustellen.

7. Steuerverfahren zur Frequenzregelung nach Anspruch 6,
**dadurch gekennzeichnet, dass**
das Verfahren nach dem Erhalten eines Heizanweisung und einer zweiten Wassertanktemperatur weiterhin umfasst:
Steuern, des Kompressors auf der Grundlage der Heizanweisung, um einen Abschaltvorgang durchzuführen, wenn die zweite Wassertemperatur eine voreingestellte Abschaltbedingung erfüllt, wobei die voreingestellte Abschaltbedingung verwendet wird, um darzustellen, dass die zweite Wassertanktemperatur größer oder gleich einem voreingestellten Abschalttemperaturwert ist, und der voreingestellte Abschalttemperaturwert verwendet wird, um einen Gesamttemperaturwert der voreingestellten Warmwasser-Solltemeperatur und einer Abschaltrücklaufdifferenztemperatur darzustellen.

8. Wärmepumpeneinheit mit einem Kompressor, einem Wassertank und einer Steuervorrichtung zur Frequenzregelung, die so konfiguriert ist, dass sie das Steuerverfahren nach einem der Ansprüche 1 bis 7 ausführt, wobei die Steuervorrichtung Folgendes umfasst:
ein Temperaturerfassungsmodul (701), das so konfiguriert ist, dass es eine erste Wärmepumpenauslasswassertemperatur und eine erste Wassertanktemperatur erhält, wobei die erste Wärmepumpenauslasswassertemperatur verwendet wird, um eine Temperatur von durch die Wärmepumpeneinheit erzeugtem Warmwasser darzustellen, und die erste Wassertanktemperatur verwendet wird, um eine Temperatur von Wasser in dem Wassertank nach dem Wärmeaustausch mit dem durch die Wärmepumpeneinheit erzeugten Warmwasser darzustellen;
ein Berechnungsmodul (702), das so konfiguriert ist, dass es eine Temperaturdifferenz zwischen der ersten Wärmepumpenauslasswassertemperatur und der ersten Wassertanktemperatur berechnet, wenn die erste Wärmepumpenauslasswassertemperatur größer oder gleich einem ersten voreingestellten Wert in einem ersten voreingestellten Zeitraum ist;
ein Frequenzbegrenzungsmodul (703), das so konfiguriert ist, dass es, wenn die Temperaturdifferenz größer oder gleich einem ersten Schwellenwert ist, den Kompressor so steuert, dass er einen Frequenzbegrenzungsbetrieb durchführt und eine zweite Wärmepumpenauslasswassertemperatur erhält, wobei die zweite Wärmepumpenauslasswassertemperatur verwendet wird, um eine Temperatur des von der Wärmepumpeneinheit nach dem Frequenzbegrenzungsvorgang erzeugten Warmwassers darzustellen; und
ein Steuermodul (704), das so konfiguriert ist, dass es den Kompressor so steuert, dass er den Frequenzbegrenzungsbetrieb stoppt, wenn die zweite
Wärmepumpenauslasswassertemperatur eine erste voreingestellte Bedingung erfüllt, **dadurch gekennzeichnet, dass**
der erste voreingestellte Wert verwendet wird, um eine Temperaturdifferenz zwischen einer maximalen Wärmepumpenauslasstemperatur und einem ersten voreingestellten Parameter darzustellen,
und dass das Frequenzbegrenzungsmodul umfasst: eine Frequenzfixiereinheit (7031), die so konfiguriert ist, dass sie, wenn die Temperaturdifferenz größer oder gleich dem ersten Schwellenwert ist, den Kompressor steuert, um einen Frequenzfixierbetrieb durchzuführen und eine zweite Wärmepumpenauslasswassertemperatur zu erhalten, und eine erste Frequenzreduzierungseinheit (7032), die so konfiguriert ist, dass sie, wenn die Temperaturdifferenz größer oder gleich einem zweiten Schwellenwert ist, den Kompressor steuert, um einen Frequenzreduzierungbetrieb durchzuführen und eine zweite Wärmepumpenauslasswassertemperatur zu erhalten, wobei der zweite Schwellenwert größer als der erste Schwellenwert ist.

9. Steuervorrichtung (900) zur Frequenzregelung, **dadurch gekennzeichnet, dass** sie einen Speicher (920) und mindestens einen Prozessor (910) umfasst, wobei in dem Speicher (920) Anweisungen gespeichert sind; und
der mindestens eine Prozessor (910) die Anweisungen im Speicher (920) aufruft, so dass die Steuervorrichtung (900) für die Frequenzregelung das Steuerverfahren für die Frequenzregelung
nach einem der Ansprüche 1 bis 7 durchführt.

10. Computerlesbares Speichermedium, **dadurch gekennzeichnet, dass** auf dem computerlesbaren Speichermedium Anweisungen gespeichert sind, wobei beim Ausführen der Anweisungen durch einen Prozessor das Steuerverfahren zur Frequenzregelung gemäß einem der Ansprüche 1 bis 7 implementiert wird.

## Revendications

1. Une méthode de contrôle de régulation de la fréquence,
dans laquelle la méthode de contrôle est appliquée à une pompe à chaleur, la pompe à chaleur comporte au moins un compresseur et un réservoir d'eau, et la méthode de contrôle de régulation de la fréquence comprend les étapes suivantes :
obtenir (101)
une première température de l'eau à la sortie de la pompe à chaleur et une première température du réservoir d'eau, la première température de l'eau à la sortie de la pompe à chaleur étant utilisée pour représenter une température de l'eau chaude générée par la pompe à chaleur, et la première température du réservoir d'eau étant utilisée pour représenter une température de l'eau dans le réservoir d'eau après échange de chaleur avec l'eau chaude générée par la pompe à chaleur ;
calculer (102)
une différence de température entre la première température de l'eau à la sortie de la pompe à chaleur et la première température du réservoir d'eau si la première température de l'eau à la sortie de la pompe à chaleur est supérieure ou égale à une première valeur prédéfinie au cours d'une première période prédéfinie ;
contrôler (103),
si la différence de température est supérieure ou égale à un premier seuil, le compresseur effectue une opération de limitation de fréquence, et obtient une deuxième température d'eau de sortie de la pompe à chaleur, dans laquelle la deuxième température d'eau de sortie de la pompe à chaleur est utilisée pour représenter une température d'eau chaude générée par la pompe à chaleur après l'opération de limitation de fréquence ; et
contrôler (104)
le compresseur arrêtera l'opération de limitation de fréquence si la deuxième température de l'eau de sortie de la pompe à chaleur atteint une première condition prédéfinie
**caractérisé par le fait que**
la première valeur prédéfinie est utilisée pour représenter une différence de température entre une température maximale de l'eau de sortie de la pompe à chaleur et un premier paramètre prédéfini, et
contrôler, si la différence de température est supérieure ou égale à un premier seuil, le compresseur pour qu'il effectue une opération de limitation de fréquence, et obtienne une deuxième température d'eau de sortie de la pompe à chaleur comprenant :
contrôler, si la différence de température est supérieure ou égale au premier seuil, le compresseur effectuera une opération de réglage de la fréquence et permettra d'obtenir la deuxième température de l'eau de sortie de la pompe à chaleur ; ou
contrôler, si la différence de température est supérieure ou égale à un deuxième seuil, le compresseur effectuera une opération de réduction de fréquence et permettra d'obtenir la deuxième température de l'eau de sortie de la pompe à chaleur, le deuxième seuil étant plus élevé que le premier.

2. La méthode de contrôle de régulation de la fréquence selon la revendication 1, **caractérisée par le fait que** le contrôle, si la différence de température est supérieure ou égale à un second seuil, du compresseur pour effectuer une opération de réduction de fréquence, et obtenir la seconde température de l'eau de sortie de la pompe à chaleur comprend :
contrôler, si la différence de température est supérieure ou égale au second seuil, le compresseur effectuera une opération de réduction de fréquence d'une première fréquence prédéfinie, et permettra d'obtenir la seconde température de l'eau de sortie de la pompe à chaleur.

3. La méthode de contrôle de la régulation de la fréquence selon la revendication 2,
**caractérisé par le fait**
**qu'**après avoir contrôlé le compresseur pour qu'il effectue une opération de réduction de fréquence d'une première fréquence prédéfinie, et après avoir obtenu la deuxième température de l'eau de sortie de la pompe à chaleur, la méthode comprend également :
contrôler, si la deuxième température de l'eau de sortie de la pompe à chaleur ne correspond pas à la première condition prédéfinie, le compresseur effectuera une opération de réduction de fréquence d'une deuxième fréquence prédéfinie jusqu'à ce que la deuxième température de l'eau de sortie de la pompe à chaleur corresponde à la première condition prédéfinie, et ensuite contrôler le compresseur pour qu'il suspende l'opération de réduction de la fréquence.

4. La méthode de contrôle de la régulation de fréquence selon la revendication 1, **caractérisée par** le contrôle du compresseur pour annuler l'opération de limitation de fréquence si la deuxième température de l'eau de sortie de la pompe à chaleur correspond à une première condition prédéfinie, comprend :
contrôler le compresseur pour qu'il suspende l'opération de limitation de fréquence si la température de l'eau de sortie de la deuxième pompe à chaleur est inférieure ou égale à une deuxième valeur prédéfinie au cours d'une deuxième période prédéfinie.

5. La méthode de contrôle de la régulation de la fréquence selon la revendication 4, **caractérisé par le fait que**
la seconde valeur prédéfinie est utilisée pour représenter une différence de température entre la première valeur prédéfinie et un second paramètre prédéfini, et la première valeur prédéfinie est utilisée pour représenter une différence de température entre une température maximale de l'eau de sortie de la pompe à chaleur et un premier paramètre prédéfini.

6. La méthode de contrôle de régulation de la fréquence selon l'une des revendications 1 à 6, **caractérisée par le fait qu'**avant d'obtenir une première température d'eau de sortie de la pompe à chaleur et une première température du réservoir d'eau, la méthode comprend également :
obtenir (601)
une directive de chauffage et une deuxième température du réservoir d'eau, la deuxième température du réservoir d'eau étant utilisée pour représenter la température de l'eau dans le réservoir d'eau avant le transfert de chaleur ; et
contrôler (602),
si la température du deuxième réservoir d'eau correspond à une condition de démarrage prédéfinie, le compresseur, sur la base de la directive de chauffage, effectue une opération d'augmentation de la fréquence pour permettre à l'unité de pompe à chaleur d'effectuer une opération de chauffage, la condition de démarrage prédéfinie étant utilisée pour représenter **le fait que** la température du deuxième réservoir d'eau est inférieure ou égale à une valeur de température de démarrage prédéfinie, et la valeur de température de démarrage prédéfinie étant utilisée pour représenter une différence de température entre une température cible prédéfinie de l'eau chaude et une différence de température de retour prédéfinie.

7. La méthode de contrôle de régulation de la fréquence selon la revendication 6,
**caractérisé par le fait que**
la méthode comprend également, après avoir obtenu une directive de chauffage et une deuxième température de réservoir d'eau, les opérations suivantes :
contrôler, si la température du deuxième réservoir d'eau correspond à une condition d'arrêt prédéfinie, le compresseur conformément à la directive de chauffage effectuera une opération d'arrêt, la condition d'arrêt prédéfinie étant utilisée pour indiquer que la température du deuxième réservoir d'eau est supérieure ou égale à une valeur de température d'arrêt prédéfinie, et la valeur de température d'arrêt prédéfinie étant utilisée pour indiquer une valeur de température totale de la température d'eau chaude cible prédéfinie et d'une différence de température de retour à l'arrêt.

8. Une unité de pompe à chaleur comprenant un compresseur, un réservoir d'eau et un appareil de contrôle pour la régulation de fréquence configuré pour exécuter le procédé de contrôle selon l'une des revendications 1 à 7, l'appareil de contrôle comprend :
un module d'obtention de température (701), configuré pour obtenir une première température d'eau de sortie de pompe à chaleur et une première température de réservoir d'eau, la première température d'eau de sortie de pompe à chaleur étant utilisée pour indiquer une température d'eau chaude générée par la pompe à chaleur, et la première température de réservoir d'eau étant utilisée pour indiquer une température d'eau dans le réservoir d'eau après échange de chaleur avec l'eau chaude générée par la pompe à chaleur ;
un module de calcul (702), configuré pour calculer une différence de température entre la température de l'eau à la sortie de la première pompe à chaleur et la température du premier réservoir d'eau si la température de l'eau à la sortie de la première pompe à chaleur est supérieure ou égale à une première valeur prédéfinie au cours d'une première période prédéfinie
un module de limitation de fréquence (703), configuré pour effectuer un contrôle du compresseur si la différence de température est supérieure ou égale à un premier seuil, et pour obtenir une deuxième température d'eau de sortie de la pompe à chaleur, la deuxième température d'eau de sortie de la pompe à chaleur étant utilisée pour indiquer la température de l'eau chaude produite par l'unité de pompe à chaleur après l'opération de limitation de fréquence ; et
un module de contrôle (704), configuré pour effectuer le contrôle du compresseur afin d'arrêter l'opération de limitation de fréquence si la deuxième température de l'eau de sortie de la pompe à chaleur correspond à une première condition prédéfinie, **caractérisée par le fait que** la première valeur prédéfinie est utilisée pour indiquer une différence de température entre une température maximale de l'eau de sortie de la pompe à chaleur et un premier paramètre prédéfini,
et **par le fait que** le module de limitation de fréquence comporte : une unité de réglage de la fréquence (7031), configurée pour contrôler, si la différence de température est supérieure ou égale au premier seuil, le compresseur pour effectuer une opération de réglage de la fréquence et obtenir une deuxième température d'eau de sortie de la pompe à chaleur, et une première unité de réduction de la fréquence (7032), configurée pour contrôler, si la différence de température est supérieure ou égale à un deuxième seuil, le compresseur pour effectuer une opération de réduction de la fréquence et obtenir une deuxième température d'eau de sortie de la pompe à chaleur, où le deuxième seuil est plus grand que le premier seuil.

9. Un appareil de contrôle (900) de régulation de fréquence, **caractérisé par le fait qu'**il comporte une mémoire (920) et au moins un processeur (910), dans lequel des instructions sont stockées dans la mémoire (920) ; et
le processeur (910) lance les instructions dans la mémoire (920), de sorte que le dispositif de commande (900) de régulation de fréquence exécute la méthode de commande pour la régulation
de la fréquence conformément à l'une des revendications 1 à 7.

10. Un support de stockage lisible par ordinateur, **caractérisé par** des instructions stockées sur le support de stockage lisible par ordinateur, permettant, lorsque les instructions sont exécutées par un processeur, de procéder à une méthode de contrôle pour la régulation de la fréquence selon l'une des revendications 1 à 7.
